# EUROPEAN PATENT APPLICATION

(11) **EP 4 711 995 A2**
(43) Date of publication of application: **18.03.2026**
(21) Application number: 25222527.1
(22) Date of filing: 29.06.2017
(51) Int. Cl.: G06Q 10/08

(54) **PROCESSING CONSIGNMENTS IN A PICK-UP AND DELIVERY NETWORK ON THE BASIS OF WEIGHT AND VOLUME INFORMATION**

(30) Priority: 29.06.2016 NL 1041965
(62) Divisional of application: 17178786.4
(71) Applicant: TNT Holdings B.V., 2132 LS Hoofddorp (NL)
(72) Inventor: Ree, Maarten Sicco Dirk, 2132 LS c/o TNT Holdings B.V.; Hoofddorp (NL)
(74) Representative: Fish & Richardson P.C.

(57) **Abstract**

A system for monitoring the physical structure of consignments transported in a pick-up-and-delivery (PUD) network is described. The monitoring is based on measured consignment information, such as measured weight and measured volume of a consignment, the system comprising: a computer system connected via a first scanning system controller to a first scanning system in a first consignment processing location, e.g. a first depot, of the PUD network; and, connected via a second scanning system controller to a second scanning system in a second consignment processing location, e.g. a second depot, of the PUD network, the first and second scanning system comprising one or more scales adapted to measure the weight of a consignment, a volume scanner adapted to measure the volume of the consignment; and, a consignment identification system comprising one or more camera units adapted to capture images of different sides of the consignment and to determine a consignment identifier on the basis of the captured image data; and, a database for storing consignment information measured by the first and second scanning system;

## Description

### FIELD OF THE INVENTION

The invention relates to processing consignments in a pick-up and delivery (PUD) network on the basis of weight and volume information, and, in particular, though not exclusively, to methods and systems for processing consignments in a pick-up and delivery network on the basis of weight and volume information that is generated at different consignment processing locations, e.g. hubs, in the PUD network and computer program product for executing such methods.

### BACKGROUND OF THE INVENTION

In the past decade, the growth of pick-up and delivery (PUD) networks for delivery of mail pieces by service providers from an origin address OA to a destination address DA has rapidly increased and is expected to increase further due to phenomena such as online shopping. Mail pieces include letters, small objects, medium size objects and large objects. One or more mail pieces may constitute a consignment.

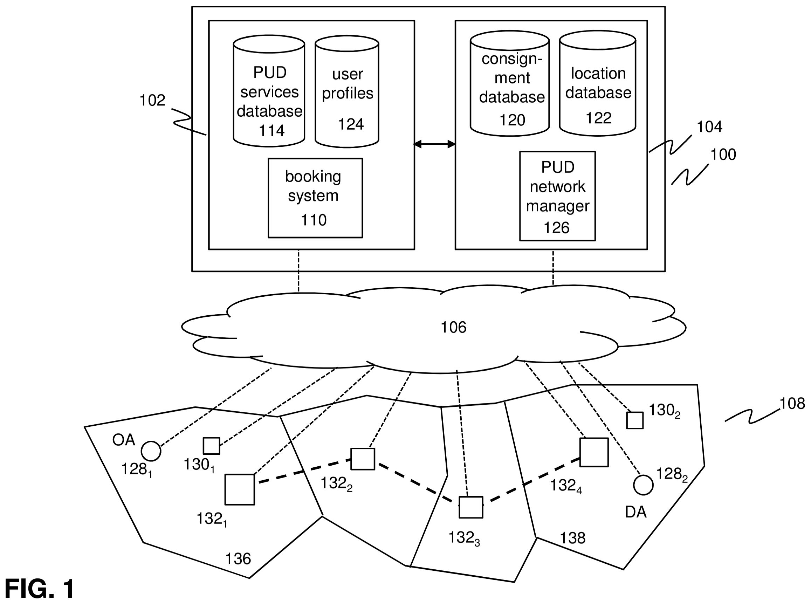

**Fig. 1** depicts PUD system comprising a PUD network **108** connected via a network **106** to a network management system **100** including a front-end system **102** and a back-end system **104.** The PUD network **108** comprises several network stations **132₁₋₄,** e.g. depots and hubs, through which the mail pieces are routed to arrive at a destination address DA. Each PUD network is associated with a service area. Physical transport of the mail pieces between network stations is conducted using trucks, aircrafts and other delivery vehicles. PUD networks may span wide areas, e.g. continents, and may contain tens of hubs and hundreds to thousands of depots.

Often, an agreed delivery time applies for the delivery of the consignment. Service providers typically offer several service levels, such as economy delivery and express delivery, for which different delivery times (and delivery costs) apply to convey a consignment from an origin address through the PUD network to the destination address. Service providers may convey millions of consignments through the PUD network each week. Obviously, the routing of the consignments through the network must be managed within such delivery networks in order to efficiently route the consignments through the PUD network while meeting agreed delivery times.

Customers, seeking the delivery service of a service provider provide shipment information to the computer system of the service provider by means of a delivery order. The front-end system **102** may process delivery orders from customers contacting the system via a booking system **110** which may be accessed via a user interface, e.g. a web-interface, For example, a customer may use a customer terminal **128₁₋₄,** e.g. a computer, in order to fill in a delivery order form listing several possible PUD services. The booking system may connect to a PUD services database **114** in order to retrieve service information (maximum weight, maximum dimensions, delivery times, etc.) for each of the PUD services. The booking system may further use a user profile database **124** in order to retrieve information about the customer requesting a delivery order.

The shipment information includes the required service level, the origin address, the destination address and may contain physical characteristics, most notably the weight and volume of the mail piece(s) of the consignment. In order to monitor (e.g. track) and manage the flow of consignments through the network, the mail pieces are provided with a marking (e.g. an identifier, typically a bar code), which is registered with the network by scanning a code that is attached to the piece. Information on the consignment may be linked to the marking and stored in a consignment database. The physical characteristics (weight and dimensions) of the consignment are initially used for determining a price that is billed to a customer.

Once a delivery order accepted, the delivery process is further handled by the back-end **104** comprising a PUD network manager **126** that is connected to the computers in the hub and depots and to mobile terminals of drivers who are transporting the consignments from the origin address to an origin depot or from a destiny depot to a destiny address. The PUD network manager is further connected to a consignment database comprising the shipment information and to a location database comprising the locations of the hubs and depots of the PUD network.

Each time a consignment arrives at a depot or leaves the depot, the marking is scanned, typically using a hand scanner, such that the PUD network manager recognizes the ID and is informed about the current location of the mail piece in the delivery network. The current location of the mail piece may be stored in the location database. Hence, consignments are registered with the PUD network when they enter the PUD network on the basis of shipment information provided by the customers. Thereafter the consignment is transported through the PUD network to the destination address. At certain times the PUD network manager will receive a depot location where the consignment has been detected but for the rest is the transport of the consignment through the network a black box process for the network management system thereby seriously limiting the possibilities to control, optimize and improve the delivery services.

For example, billing based on the shipment information of the customer however if it shipment information (weight, dimensions, appearances, etc.) often deviates from the actual physical state. Furthermore, the physical state of consignment may change (e.g. damage, modifications due to repackaging, etc.) during the transportation through the PUD network. Such events will have a substantial influence on the accuracy of the planning process thus leading to sub optimal services. Moreover, the shape of a consignment, e.g. a non-stackable pallet, may influence the efficiency of loading a truck with a certain amount of consignments.

Due to the fact that a PUD service provider does not have an accurate overview of the physical status of consignments in the PUD network, it is not possible to execute accurate network capacity planning, contingency planning (both at the level of a depot or hub and at the level of the PUD network) and ultimately rating and invoicing. Hence, as the foregoing illustrates, there is a need in the art for improved methods and systems for processing consignments in a PUD network.

### SUMMARY OF THE INVENTION

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is an objective of the invention to reduce or eliminate at least one of the drawbacks known in the prior art. One aspect of the invention discloses a system for monitoring the physical structure of consignments transported in a pick-up-and-delivery (PUD) network, the monitoring being based on measured consignment information, such as measured weight and measured volume of a consignment, the system comprising:
a computer system connected via a first scanning system controller to a first scanning system in a first consignment processing location, e.g. a first depot, of the PUD network; and, connected via a second scanning system controller to a second scanning system in a second consignment processing location, e.g. a second depot, of the PUD network,
the first and second scanning system comprising one or more scales adapted to measure the weight of a consignment, a volume scanner adapted to measure the volume of the consignment; and, a consignment identification system comprising one or more camera units adapted to capture images of different sides of the consignment and to determine a consignment identifier on the basis of the captured image data; and,
a database for storing consignment information measured by the first and second scanning system;
wherein the computer system is adapted to:
   receive first measured consignment information from the first scanning system controller, the first measured consignment information being associated with a consignment identifier; and,
   receive second measured consignment information from the second scanning system controller, the second measured consignment information being associated with a consignment identifier that is identical to the consignment identifier associated with the first measured consignment information;
   compare the first measured consignment information with the second measured consignment information; and,
   if at least part of the first measured consignment information deviates from at least part of the second measured consignment information, setting a warning flag in the database, the warning flag signaling that the physical structure of the consignment identified by the consignment identifier has been changed during transportation from the first consignment processing location to the second consignment processing location.

In an embodiment, the computer system may further be adapted to: compare the first measured consignment information with the second measured consignment information; and, if the first measured consignment information does not deviate from the second measured consignment information, setting a confirmation flag in the database, the confirmation flag signaling that the physical structure of the consignment identified by the consignment identifier has not been changed during transportation from the first consignment processing location to the second consignment processing location.

In an embodiment, the first and second scanning system may comprise a weighting system comprising one or more scales, the one or more scales being integrated in the flour of the consignment processing location such that the surface of the floor matches the top surface of the scales.

In a further embodiment, the first and second scanning system controller may be adapted to use the consignment identifier and the measured consignment information for determining a first and second loading locating for the consignment at the premises of the first and second consignment processing location respectively; and, to display routing information for guiding a driver to said determined loading location.

In a further embodiment, the first and second scanning system may comprise one or more conveyor belts, wherein at least one of said one or more conveyor belts comprises a scale for determining the weight of consignments that are transported within the consignment processing location via said one or more conveyor belts.

In an aspect, thein invention relates to scanning system for routing consignments in a consignment processing location on the basis of measured consignment information, such as measured weight and measured volume of a consignment, the system comprising:
a weighting system comprising one or more scales, the one or more of scales being integrated in the flour of the consignment processing location such that the surface of the floor matches the top surface of the scales
a volume scanning system mounted above the a plurality of scales, the volume scanning systems comprising one or more lasers for scanning one or more consignments located on the at least part of the polarity of scales;
a consignment identification system comprising one or more camera units adapted to capture images of different sides of the consignment and to determine a code, such as a consignment identifier, on the consignment on the basis of the captured image data;
a display unit for displaying information to a driver
a programmable control unit connected to said weighting system, volume scanning system and consignment identification system;
wherein the control unit is programmed to use the consignment identifier and the measured consignment information for determining a loading location for the consignment at the premises of the consignment processing location; and, to display routing information for guiding a driver to said determined loading location.

In a further aspect, the invention relates to a scanning system for routing consignments in a consignment processing location on the basis of measured consignment information, such as measured weight and measured volume of a consignment, the system comprising:
one or more conveyer belts;
at least one scanner adapted to determine the weight and volume of consignments transported by the conveyer and to determine a code on the consignments, the scanner being configured to obtain scan data of each scanned parcel including the weight and volume of the consignment, a consignment identity information and destination information;
a series of chutes, connecting laterally to one or more conveyer belts;
ejectors arranged to move passing parcels from the conveyer onto associated chutes;
a programmable control unit arranged for selective activation of the ejectors responsive to the scan data and storing chute identities and associated destination information for each chute;
wherein the control unit is programmed to enable a transportation means, e.g. cage or a truck, to be logged on when transportation means is linked to a selected chute and to be logged off when the cage is removed from the chute, wherein logging on includes input of a cage identity and linking the cage identity to a chute identity of the selected chute;
and wherein the control unit is programmed to keep record of parcel identities of parcels moved to said selected chute in a time period between logging on and logging off of the cage.

In an embodiment, the cage or truck may be provided with a scan readable code coding a cage or truck identity and wherein logging on the cage or truck involves scanning the code and communicating the cage or truck identity to the programmable control unit and linking the cage or truck identity to a chute identity of the chute to which the cage or truck is linked.

In an embodiment, the code may be a bar code, a QR code or a RFID tag.

In an embodiment, the number, weight and/or joint volume of all consignments assigned to a given chute during the time that a given cage or truck is logged-on is determined and compared with the number or weight of the collected consignments in the cage or truck after the cage or truck has been logged out or with the maximum total loading volume of the cage or turck to determine the identity of the parcels left on the chute after the cage or truck was logged-off.

In embodiment a marker may be used to indicate whether or not a cage or truck is logged-in.

Still other aspects of the invention relate to a computer program and a, preferably non-transitory, computer readable storage medium storing the computer program. The computer program contains instructions (software code portions) which, when executed by a processor of a data processing system, carry out steps of one or more of the methods described above.

The present invention will further be illustrated with reference to the attached drawings, which schematically show various embodiments according to the present invention. It will be understood that the present invention is not in any way restricted to these specific embodiments. Moreover, combinations of any of the embodiments and limitations are envisioned by the disclosure.

### BRIEF DESCRIPTION OF THE DRAWINGS

Aspects of the invention will be explained in greater detail by reference to exemplary embodiments shown in the drawings, in which:
**Fig. 1** depicts a schematic of a PUD network.
**Fig. 2** depicts part of a PUD system according to an embodiment of the invention.
**Fig. 3** depicts part of a consignment processing location comprising one or more scanning systems according to an embodiment of the invention.
**Fig. 4** depicts part of a PUD system according to another embodiment of the invention.
**Fig. 5** depicts a schematic of a scanning system for non-conveyable consignments according to an embodiment of the invention.
**Fig. 6A-6C** depicts a schematic of scanning process using a scanning system according to an embodiment of the invention.
**Fig. 7A** and **7B** depict flow diagrams of processing consignments in a PUD network on the basis of weight and volume according to various embodiments of the invention.
**Fig. 8** depicts a schematic of a scanning system for conveyable consignments according to an embodiment of the invention.
**Fig. 9** depicts a schematic of scanning process using a scanning system according to an embodiment of the invention.
**Fig. 10** provides a schematic of a data processing system operable to implement one or more aspects of the present invention.

### DETAILED DESCRIPTION OF THE DRAWINGS

The invention aims to monitor and control processes in the depots and hubs and the processes in a PUD network on the basis of measured physical characteristics of the consignments that enter and leave the depots and hubs. The physical characteristics (weight, volume, dimensions, shape, images) are measured on the basis of special high-throughput weight and volume scanning systems (hereafter referred to as scanning system) that are installed at the entrance of hubs and depots of the PUD network. Each scanning system is adapted for both weighting and determining the volume and/or dimensions of a consignment. In some embodiments, the scanning system may also configured to determine images of different sides of a consignment. Each scanning system measures the weight and volume of a consignment, identifies the consignment by determining a code, e.g. a bar code or QR code representing an consignment identifier, in at least one of the images of the consignment and sent this information to the network management system of the PUD network

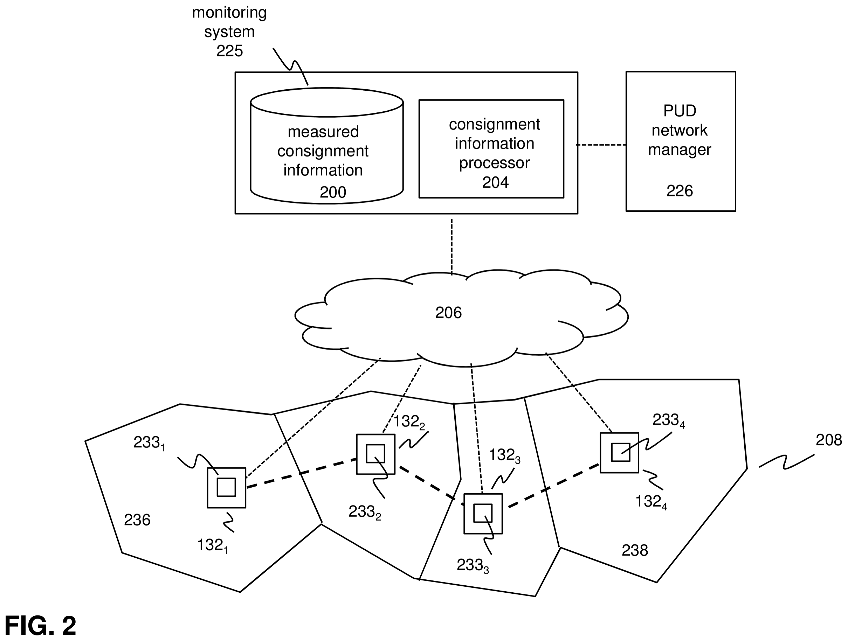

**Fig. 2** depicts part of a PUD system according to an embodiment of the invention. In particular, **Fig. 2** depicts a PUD system that is similar to the PUD system as described with reference to **Fig. 1****.** In this embodiment however, the PUD system comprises a monitoring system **225** coupled to the PUD network manager **226.** The monitoring system is coupled via the network **206** to at least one scanning system **233₁₋₄** that are located in the hubs and/or depots **232₁₋₄** of the PUD network **208.**

Each depot or hub comprises at least one at least one scanning system for registering and monitoring the measured characteristics such as the weight, volume and shape of consignments at the input (and optionally the output). This information is referred to as the measured consignment information. The measured consignment information, such as the weight, volume and dimensions, of each consignment (identified by a consignment ID, e.g. a bar code or a QR code) generated by a scanning system at a particular geographical location is transmitted via a communications network **206** to a network management system of the PUD system where it is processed by the monitoring system. The measured consignment information may be stored in a measured consignment information database **203** and linked on the basis of the consignment ID to other information regarding the consignment, e.g. customer shipping information, in the consignment database **102** and location information in the location database **122.** Hence, the consignment and location database receive measured consignment information such as the weight and volume of the consignment for different locations (hub and depot locations) in the PUD network. This way, the physical constitution of the consignment can be monitored during the PUD process. A consignment information processor **204** is configured to monitor the measured consignment information in time and if deviations and/or changes in the measured consignment information is determined, the consignment information processor may trigger an appropriate action. Different applications are described hereunder in further detail.

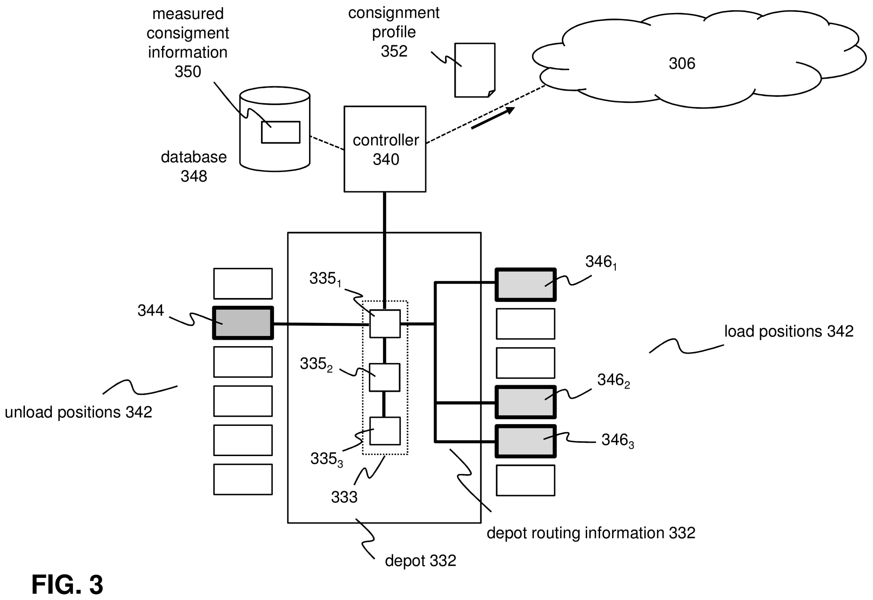

**Fig. 3** depicts part of a consignment processing location comprising one or more scanning systems according to an embodiment of the invention. In particular, **Fig. 3** depicts a depot **332** comprising a scanning system **333** coupled to a controller **340,** which in turn is connected via a network **306** to the monitoring system (not shown) as described in detail with reference to **Fig. 2****.** The scanning system may comprising one or more **335₁₋₃** scanning units so that it is possible to process consignments in parallel.

The depot may comprising a plurality of unload positions **342.** A vehicle **344** may park at an unload position so that consignments can be unloaded and be transported to the scanning system. For example, consignments of the vehicle at the unload position may be scanned by scanning unit **335₁** which determines for each consignment measured consignment information including the weight and volume of the consignment and an consignment ID (e.g. by analysing images of the sides of the consignment for a marker, a code representing the consignment ID and, optionally, information on the destination location). The measured consignment information may be stored by the controller in a local database **348** and sent by the controller via the network **306** to the monitoring system. The measure consignment information **350** may have the format of a consignment profile **352** associated with a certain time instance (e.g. a time stamp) and location (e.g. hub location).

As will be described hereunder in more detail, the measured consignment information may be used by the controller **340** to generate depot routing information **332.** The depot routing information is used to route a scanned consignment through the depot, in particular to at least one of the load positions 342 of the hub at which an vehicle **346₁₋₃** is parked which is designated by the PUD system to transport the consignment to a further depot or to the destination address. To that end, the controller receives information from the network management system and/or from the controller which vehicles are currently positioned at load position and which vehicle(s) is (are) capable of delivering the scanned consignment at a certain location. Hence, when the consignment is scanned and identified the controller may determine a route through the hub to a designated vehicle at a certain load position. Hence, if more vehicles are available the controller may use the measured weight and/or volume in order to select a vehicle that is most suitable for the particular consignment. To that end, the controller has access to specific capabilities (type, loading capacity, loading dimensions, etc.) of the vehicles. Hence, this way, the measured consignment information is able help the system to help selecting which vehicle is most suitable or capable of delivering a consignment. This is particular useful in case of large consignments or consignments with a specific shape or consignments that are not stackable.

In an embodiment, the determination of the route may include generating visual information, e.g. a map and/or an indicator, so that a forklift driver is able to transport the consignment, e.g. an non-conveyable consignment such as a pallet of the like, to the desired load position. In another embodiment, the determination of the route may include controlling one or more conveyor belts for routing conveyable consignment via conveyor belts to the desired load position.

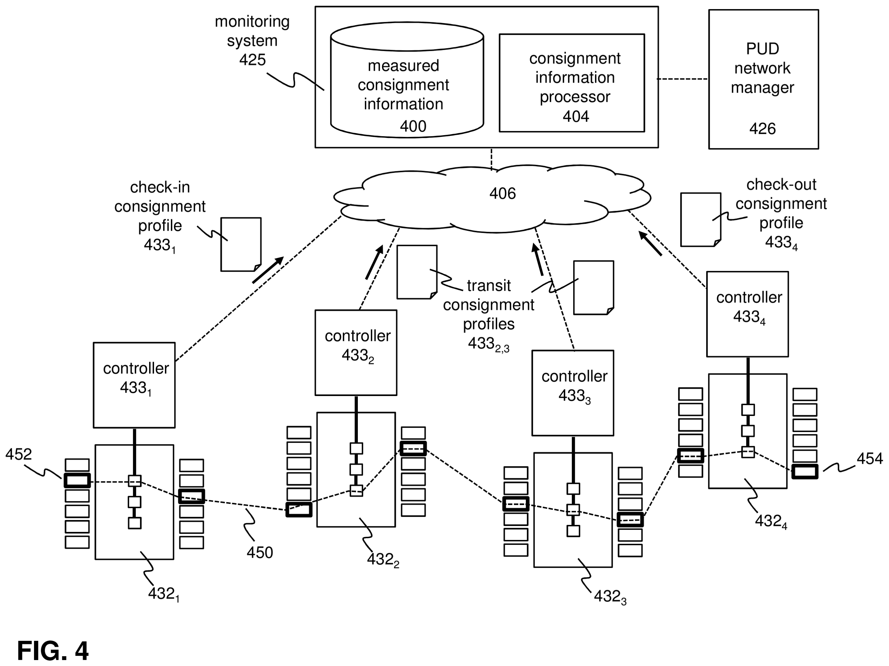

**Fig. 4** depicts part of a PUD system according to an embodiment of the invention. In particular, **Fig. 4** depicts a PUD system comprising a monitoring system **425** comprising a database **400** for storing measured consignment information and a consignment information processor **404,** wherein the monitoring system is further coupled to the PUD network manager **426.** The monitoring system is connected via a network **406** to scanner system controllers **433₁₋₄** that are located at hubs **432₁₋₄** in the PUD network in a similar way as described with reference to **Fig. 2** and **3****.** When an consignment is picked-up at an origin address and transported by a vehicle **452** to the first hub **432₁.** The scanner system of the first hub will determine the measured consignment information and the controller may send this information as a check-in consignment profile **433₁** to the monitoring system, which stores the profile in the measured consignment information database. The check-in consignment profile describes the physical state of the consignments when it enters the PUD network. Thereafter, the consignment may be routed in the depot to a further vehicle at a load position which will transport the consignment to a further depot **432₂** that may execute a similar scanning process producing a transit consignment profile **433₂.** Hence, when the consignment is in transit, i.e. transported via different depots **432₂,₃** to a final depot close to the delivery address of the consignment, transit consignment profiles **433₂,₃** are generated and delivered to the monitoring system, wherein the transit consignment profiles describe the physical state of the consignment at the depots when the consignment is in transit. Finally, the scanning system of the last depot **432₄** will generate a check-out consignment profile **433₄** describing the physical state of the consignment at the end of the delivery route. The thus generated consignment profiles provides traceable evidence of the physical state of the consignment when it is transported through the PUD network. As will be described hereunder in more detail, the measured consignment information may be used by the PUD network to provide an accurate overview of the physical status of consignments in the PUD network. Moreover, it provide more accurate information for network capacity planning, contingency planning (both at the level of a depot or hub and at the level of the PUD network) and ultimately rating and invoicing.

The scanning systems described in this disclosure may be realized in different ways and can be optimized for a particular type of consignment. For example, non-conveyable consignments, e.g. goods that are packaged on a pallet, are processed and transported within the depot using forklifts. In that case, the scanning system may be optimized for use with non-conveyable consignments that are transported in the depot by forklifts. Similarly, conveyable consignments are transported within a depot on the basis of one or more conveyor belts. In that case a conveyer belt may comprise a scanning section for automatic weighting and volume scanning of the consignments transported on the belt.

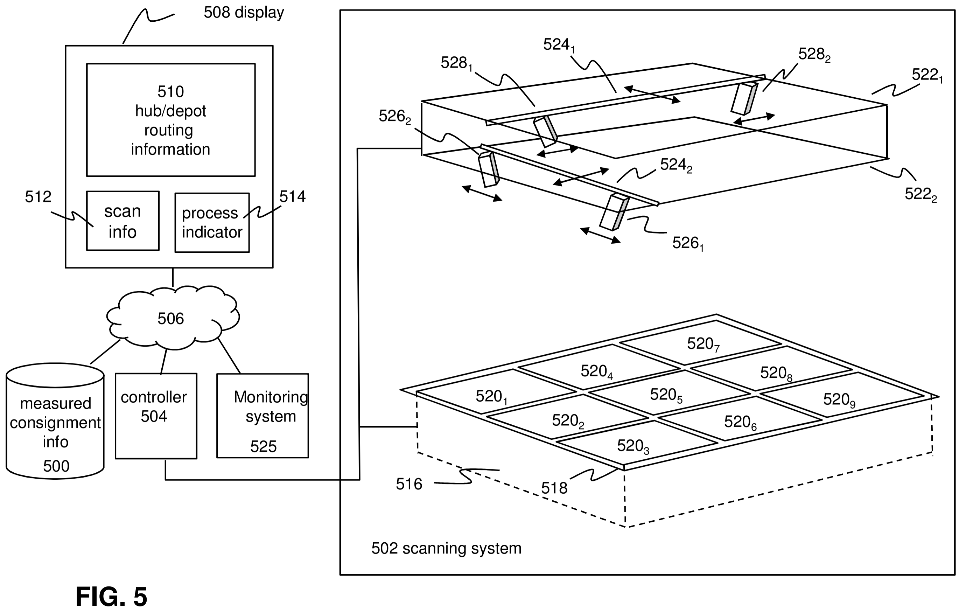

**Fig. 5** depicts a schematic of a scanning system for non-conveyable consignments according to an embodiment of the invention. In particular, **Fig. 5** depicts a scanning system **502** for non-conveyable consignments that is optimized for high throughput processing by forklifts. The scanning system comprising a weighting system **516** comprising a plurality of independently controllable electronic scale units **520₁₋₉** and a volume scanning system **522₁,₂** comprising a number of movable lasers and/or cameras **526₁,₂;528₁,₂.** The scanning system may comprise a mounting frame **524₁,₂** for mounting movable camera's so that the cameras can be moved to different x,y positions in a plane parallel to the top surface of the scales.

Volume measurement is performed using a volume scanner comprising lasers and mirrors enabling providing dimensioning data for both cuboid and non-cuboid objects. Software is used, e.g. in computer system, to calculate a three-dimensional volume shape of the consignment as the smallest enclosing rectangular box in real time and may also be used to determine stackability of a consignment.

The camera's may be part of a camera-based identification system that is configured to image the sides (four sides, one top) of the consignment and to detect on the basis of the image data one or more markings, e.g. a code representing the consignment ID and, optionally, information about the destination location.

The scanning system is connected to a scanning system controller **504** for controlling the scanning process and a display **508** (e.g. one or more large displays mounted close to the scanning system, a display in the forklift truck, a mobile phone or another graphical user interface such as a head-mounted display, e.g. Google glasses). During the scanning process, the controller will display information on the scanning process to a user. This information may include: routing information **510,** scanning information **512** and a process indicator **514** that signals the status of the one or more process steps of the scanning.

The electronic scales may be integrated in the flour of a depot such that the surface of the floor matches the top surface of the scales. This way forklifts can mount and demount consignments in a very fast way. Moreover, the plurality of scales (the matrix of scales) under the volume scanning system can be controlled such that one or more of the scales of the plurality of scales form a scale for a consignments of a particular size. Hence, the plurality of scales can be effectively configured into scales of different sizes. This way scanning processes of different consignments can be partly processed in parallel.

Further, during the scanning process, the display informs a forklift driver about the status of the scanning process using a process indicator **514.** Further it can display scanned information **512,** e.g. weight and volume, and warehouse routing information **510.** Once the scanning process is finished the data may be stored in a database **500** and/or forwarded to the VCM **525** which can use this information for capacity planning purposes. The volume and weight information is also used for optimizing and to increasing the safety of processes within a depot or a hub.

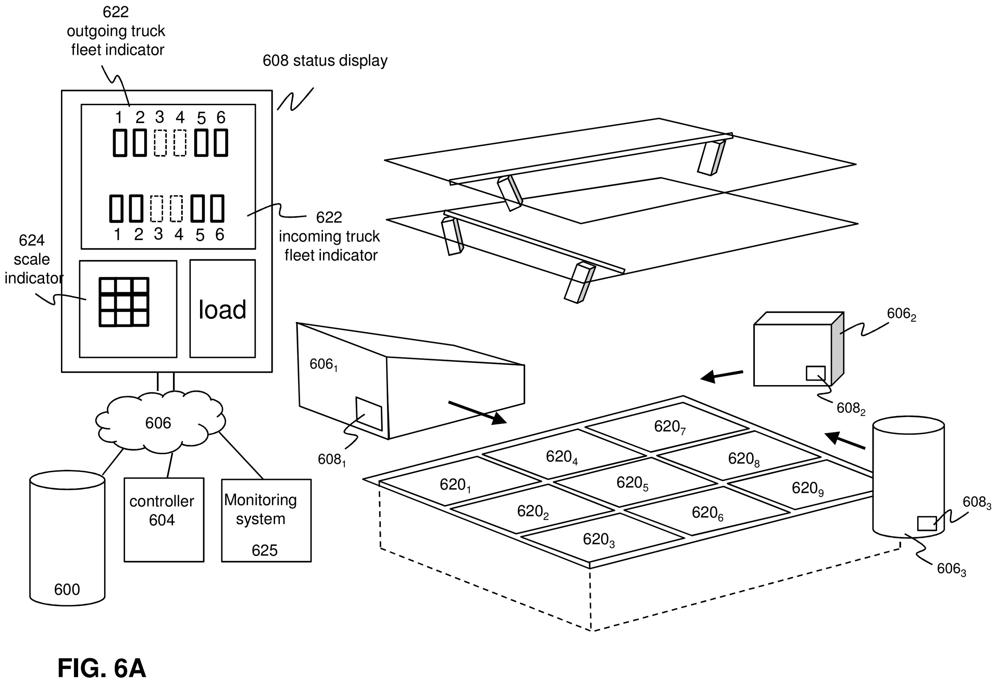

The scanning system of **Fig. 5** can be used for high throughput scanning of non-conveyable consignments. This process, which is executed by the scanning system controller **504** connected to the management system of the PUD network, is illustrated hereunder with reference to Fig. **6A-6D.**

**Fig. 6A** depicts a first phase wherein the controller of a scanning system (as described with reference to **Fig. 5****)** displays via the status display **608** that consignments can be loaded onto the scales. A scale indicator **624** in the display signals a forklift driver which scale units are ready for receiving a consignment. The scanning system further comprises a truck fleet indicator **622** displaying trucks that are arranged at the unload section of the depot (the incoming truck fleet indicator) and trucks that are arranged at the load section of the depot (the outgoing truck fleet indicator) which ready for receiving scanned consignments. The ingoing and outgoing truck fleet indicator may indicate at which positions of the unload and load positions trucks are present, e.g. by indicating these positions in a different color that the rest of the positions. Incoming consignments **606₁₋₃** are ready to be scanned, wherein each consignment comprises at least one marker **608₁₋₃,** e.g. a code representing the consignment ID and, optionally, the destination location, for identification purposes.

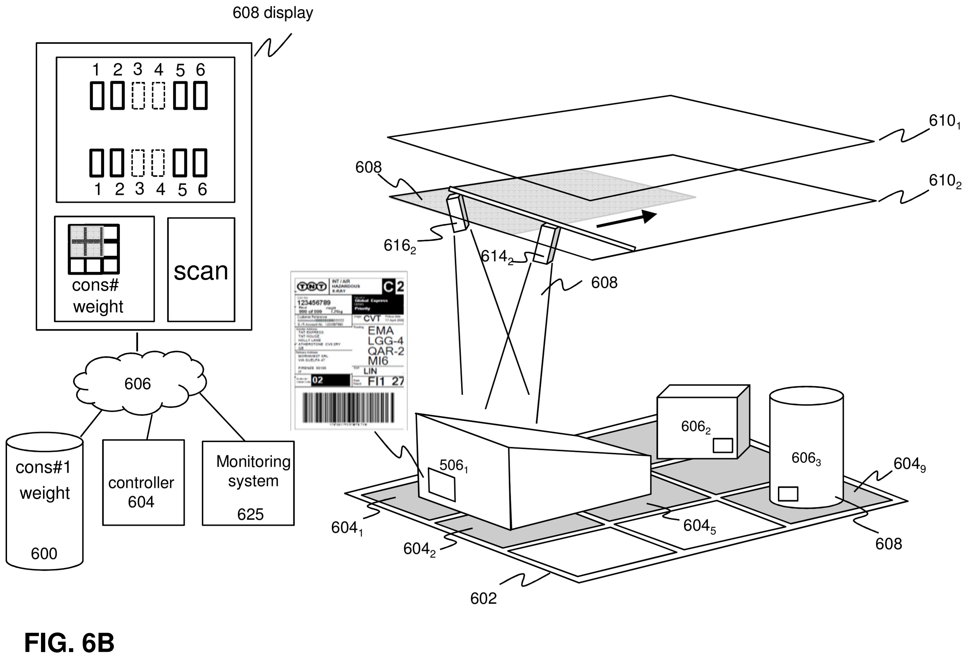

Then, in a second phase as shown in **Fig. 6B****,** different consignments may be loaded onto different scales of the plurality of scale units of the weighting system of the scanning system. In that case, the weighting system senses that a first consignment **606₁** is loaded onto four electronic scale units. Therefore, the scanning system controller configures these scale units as a first combined scale for weighting the first consignment. Similarly, a second consignment **606₂** is loaded on two electronic scale units that are configured by the controller as a second combined scale for weighting the second consignment and a third consignment **606₃** is loaded on a single electronic scale for weighting the third consignment.

Thereafter the weighting and volume scanning process may be started. To that end, the first combined scale may weigh the first consignment and transmits the measured weight to the scanning system controller which may display the value onto the dashboard. The measured weight may be further stored in a data base **600.** Additionally, the scale units that are active in the weighting process may be displayed on the display. Further, the display may signal that the scanning system is in the "scanning status".

As the scanning system controller knows the position of the currently active scale units in the matrix of scale units, the controller uses this information in order to define a scanning area **608** which the volume scanning system uses in order to determine a volume of the first consignment via a well-known laser scanning process. Further, the system captures images of the consignment that include a marker representing the ID of the consignment (e.g. a bare code). These images may be analysed and the marker may be recognized using well-known image recognition software. The thus determined consignment ID can be displayed on the display as well.

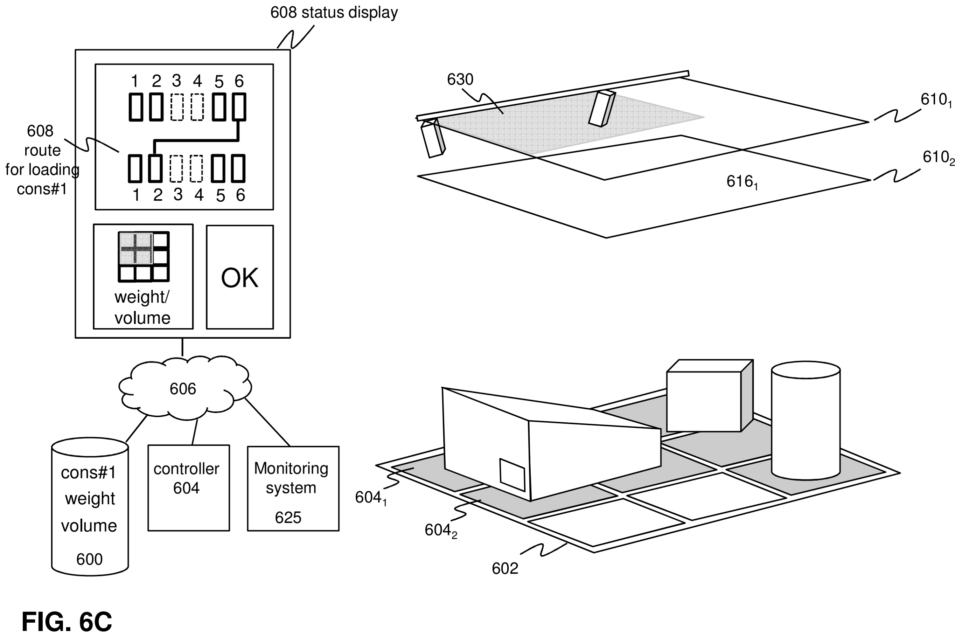

In the third phase and last phase as shown in **Fig. 6C****,** the scanning system controller determines that the volume scanning process was successful and displays the measure volume onto the display. The measured consignment information, in this case the consignment ID, the measured weight and the measured volume is stored in a database and forwarded to the PUD network manager. The PUD network manager may use the scanned information in combination with the geographical location of the depot in the PUD network and other relevant information (e.g. destination address, delivery type, etc.) to select a particular loading truck that is ready for shipment of the consignment. The scanning system controller may display routing information for informing the driver of the forklift the route within the warehouse to the loading truck. The forklift driver then unloads the first consignment and transports the consignment to the desired location in the warehouse.

It is noted that the scanning system controller can execute the loading, weighting, scanning and unloading process depicted in **Fig. 6A-6C** for multiple consignments in parallel (or at least partly in parallel). For example, during the weighting and scanning process of a first consignment a second consignment may be loaded onto scales that are not used for the weighting and scanning process of the first consignment. Alternatively and/or in addition, during the weighting and scanning process of a first consignment a third consignment can be unloaded from the weighting system while the forklift driver is instructed to transport the third consignment via a certain route to a truck loading area.

This way high throughput processing of consignments can be achieved wherein the drivers are instructed to follow predetermined routes through the warehouse. The routing information is generated such that the drives follow fixed routes through the warehouse and such that it takes into account other drivers. This way a more safe environment within the warehouse can be created.

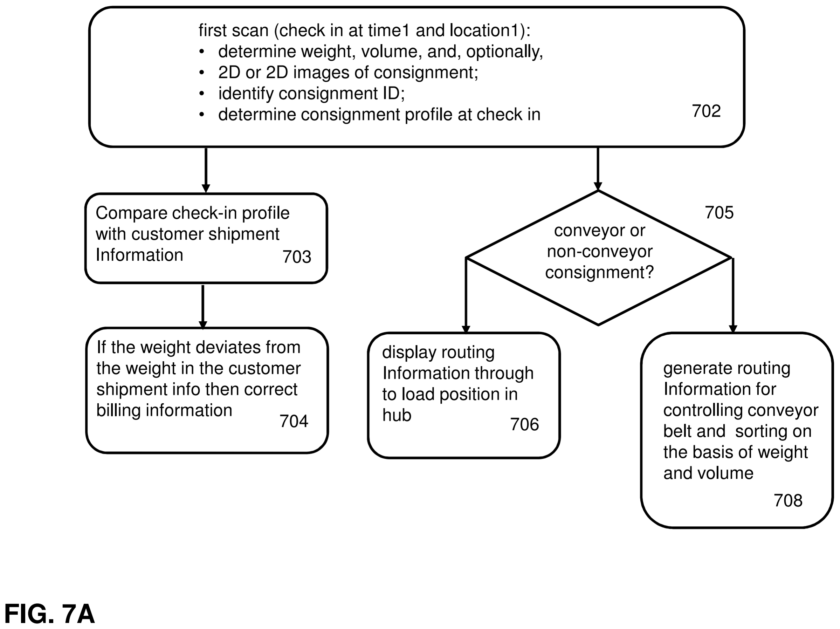

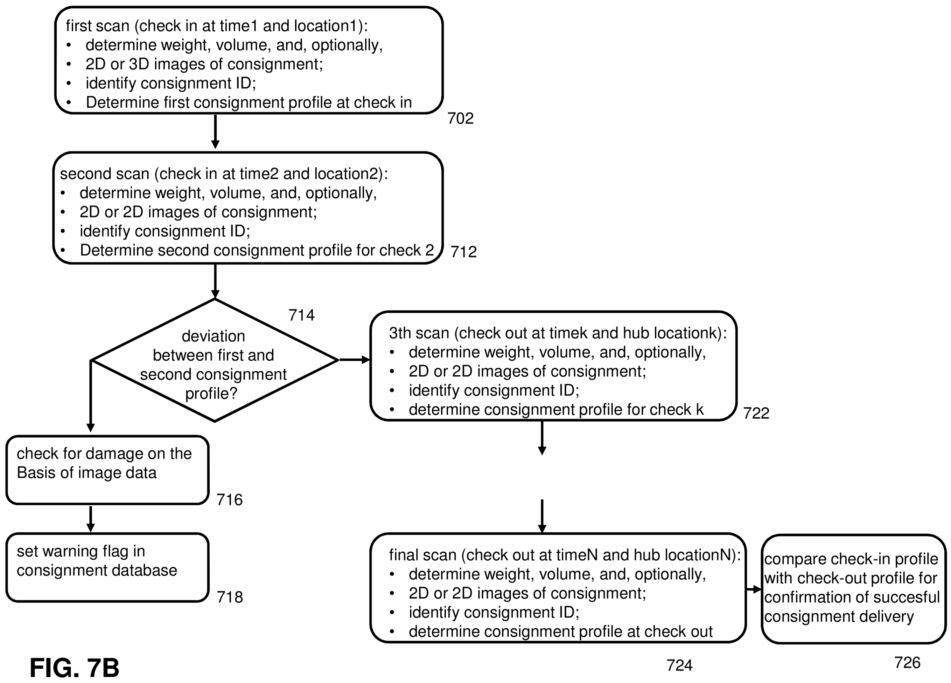

**Fig. 7A** and **7B** depict flow diagrams of processing consignments in a PUD network on the basis of weight and volume according to various embodiments of the invention. In a first step **702** of **Fig. 7A** a scanning system may execute a first scan of a consignment at a predetermined time and location in which the weight, volume, and one or more images of consignment are produced. Based on the image data, a consignment ID is determined. Thereafter, the measured information and the consignment ID are formatted into a first (check-in) consignment profile. Then, the PUD system, e.g. the consignment information processor or the PUD network manager, may use the consignment ID to link the information in the first check-in consignment profile with the with customer shipment information (step **703).** If it is determined that the weight information deviates from the weight information in the shipment information, then the PUD system is triggered to correct the billing information. Hence, in this process, the real weight of the consignment is compare with the weight of the consignment as provided by the customer in the shipment information (step **704).** As the price of the shipment is directly coupled to the weight of the shipment billing can be performed and corrected on the basis of the actual weight of the consignment as measured during check in.

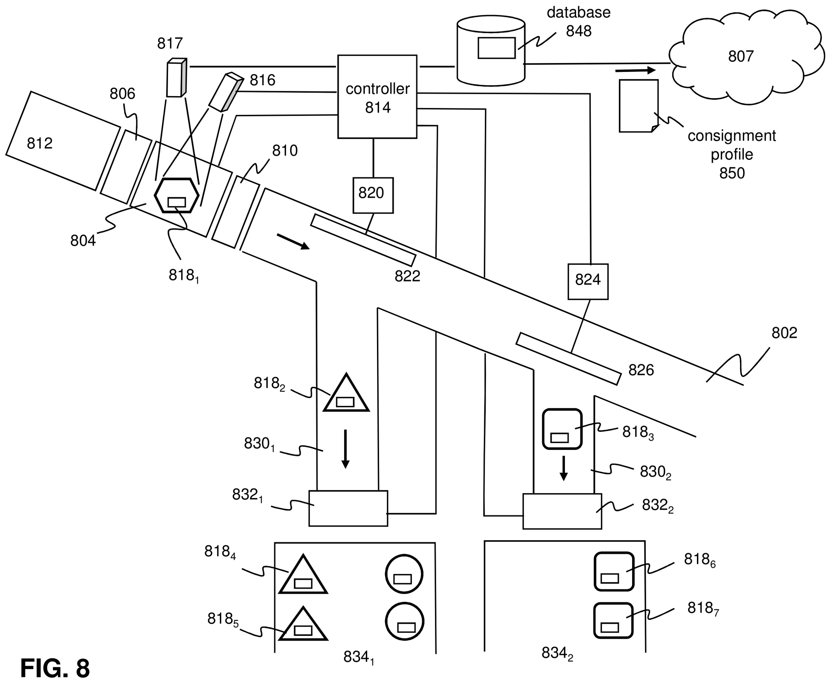

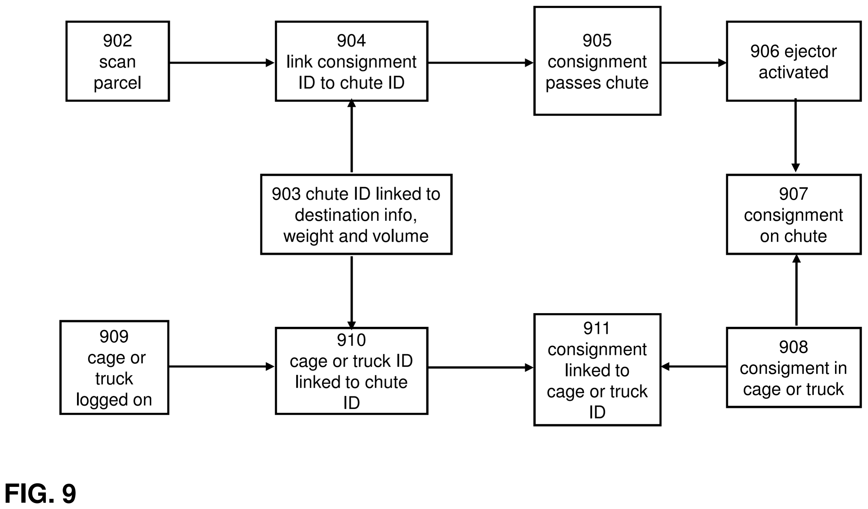

In a further process, in case the consignment is a non-conveyable consignment, routing information may be generated on the basis of the measured consignment information the routing information representing a route through the depot to load position of a vehicle (e.g. a truck or a van) that is suitable for transporting the scanned consignment (steps **705** and **706).** Alternatively, in case the consignment is a consignment that can be transported in the depot using a conveyor belt, routing information is generated on the basis of the measured consignment information for controlling routing of the consignment through a plurality of computer-controllable conveyor belts (steps **705** and **708).** An example of such routing information will be described hereunder with reference to **Fig. 8** and **9****.**

In a first step **702** of **Fig. 7B** a scanning system may execute a first scan of a consignment at a predetermined time and depot location in which the weight, volume, and one or more images of consignment are produced. Based on the image data, a consignment ID is determined. Thereafter, the measured information and the consignment ID are formatted into a first (check-in) consignment profile. Thereafter, at a further time and depot location a second scan of the consignment may be executed and a second consignment profile may be generated.

The monitor system may then check for deviations between the first and second consignment profile, e.g. deviations in the weight and/or volume. If one or more deviations are detected that are outside a particular error range, in one embodiment, the monitor system may analyses the image data of the consignment in order to localize changes in the shape of the consignment (step **718).** Such changes in the shape may be an indication that the consignment is damaged. If deviations between the first and second consignment profile are found that are outside an predetermined error range, a warning flag may be set in the consignment database, the warning flag indicating that the physical characteristics of the consignment has changed during transportation which may be an indication that the consignment is damaged or the like. In that case, appropriate action can be taken.

In a further process during the transportation of the consignment further scans may be executed at different depots thereby producing a plurality of consignment profiles associated with different times and locations during the transportation of the consignment (step **722** and **724).** After the generation of the last check-out consignment profile, the check-in and check-out consignment profile may be compared and if there are no significant deviations between the two, the PUD system may determine that the transportation was successful in the sense that no damage occurred during transportation (step **726).** Hence, the measured data during transportation can be used as evidence that the consignment was not damaged. This is especially important in case of special consignments that are difficult to handle so that the risk of damage during transport is not negligible.

**Fig. 8** depicts a schematic of a scanning system for conveyable consignments according to an embodiment of the invention. In particular, **Fig. 8** shows a schematic representation of an exemplary embodiment of a scanning system which is integrated with a conveyor belt. The scanning system comprises a plurality of convey belts **802,804-806,810,812, 830₁,₂** wherein at least one of the convey belts **804** is a scale belt, i.e. a belt that includes a scale. The scale belt may be located between an in-belt **812** and an out-belt **802** and may comprise an in-feeder belt **806,** a scale belt **708** and an outfeeder belt **810.** Weight measurements may be performed by the scale belt **708.** A consignment may be provided via the in-feeder belt **806** onto the scale belt and when the consignment is moved above the scale, the belt may be shortly stopped so that the weight can be measured. Markings, e.g. a code representing the consignment ID and, optionally, information about the destination location, are registered using a camera-based identification system **816** enabling reading markings from e.g. five sides (four sides, one top). Volume measurement is performed using a volume scanner **817** comprising lasers and mirrors enabling providing dimensioning data for both cuboid and non-cuboid objects. Software may be used, e.g. in computer system, to calculate a three-dimensional volume shape of the consignment as the smallest enclosing rectangular box in real time and may also be used to determine stackability of a consignment.

A scanning system controller **814** is connected to the belts, imaging apparatus **816** and volume scanner apparatus **817.** The controller is configured to control the belts (the infeed belt, the scale belt and the outfeed belt) such that consignments are fed onto the scale belt with the correct gaps in between to allow appropriate measurement of the weight and volume. The scanning system controller may be further connected to a database **848** for storing the measured consignment information. The controller may send the measured consignment information as a consignment profile **850** via the network **807** to the monitoring system of the PUD system (not shown) in a similar way as described with reference to **Fig. 5****.**

A plurality of chutes **830₁,₂** are connected laterally to a side of the main conveyor belt **802.** In an alternative arrangement chutes may also be provided at both sides of the main conveyor belt **802.** A chute is usually implemented as roller tables or slides forming a buffer for consignments collected for an associated destination. Each chute has an upstream end connecting to the main conveyor belt and a downstream end where consignments **818₁₋₇** can be loaded into cages or trucks **834₁,₂.** The upstream ends of the chutes are within reach of ejectors **822,826** which can be moved by an electrometer **820** between a retracted position (ejector **822** in **Fig. 8****)** and an ejecting position (ejector **826** in **Fig. 8****).** When an ejector **822,826** is activated it moves from the retracted position to the ejecting position to move a passing consignment **818₂,₃** from the main conveyer onto the respective chute.

The scanning system controller is connected to the ejectors and adapted to activate the ejectors when a predetermined consignment is passing by. Additionally, the controller has information including chute identifiers and associated destination information for each chute. Additionally, chutes may be associated with information on the weight, volume and/or dimensions of the consignments. Hence, the scanning system controller scans each consignment that passes by and uses the measured consignment information, i.e. the consignment ID, the weight and the volume, in order to allocate a consignment to a predetermined chute that is associated with destination information and measured consignment information (e.g. max or min weight, max or min volume and/or max or min dimensions) that corresponds to that of the consignment (here the destination may also be the destination where the consignment should be transported or the next depot). When a consignment passes the chute to which it has been allocated, the scanning system controller will activate the respective ejector to move the consignment onto the chute. Hence,

At the downstream ends the chutes are provided with a terminal **832₁,₂** where a cage or a truck can be logged on when the cage or truck is linked to the chute. The cage or truck can be logged off when the cage or truck is removed from the chute. The controller is programmed to receive the log-on and log-off data. Logging on includes input of a cage or truck identity and linking the cage or truck identity to a chute identity of the selected chute. The controller is also programmed to keep a record of consignment identities of consignment that have been moved onto selected chutes in a time period between logging on and logging off of the cage or truck.

**Fig. 9** depicts a schematic of scanning process using a scanning system according to an embodiment of the invention. In particular, the flow chart of **Fig. 9** illustrates the individual steps of a method for sorting and handling consignments for transhipment using a scanning system. **Fig. 9** is explained with reference to the system of **Fig. 8****.**

Consignments may be collected on the conveyer belt wherein each consignment is labelled with a unique scan-readable code, such as a barcode. In step **802** of **Fig. 9** the scanning system, including the scale belt, scans the consignments that pass by. During the scanning the weight, volume, dimensions and consignment ID may be determined. The scanning system controller may store the measured consignment information in a database and send the information as a consignment profile (the physical status of the consignment at a predetermined time and location) to the monitoring system of the PUD system.

The controller has information on the chute identifiers and destination information for each chute. Additionally, the chutes may be associated with weight, volume and/or dimensions of the consignments. For example, one shut may collect consignments within a predetermined range of weights and/or volumes. Hence, the chute identities are associated with destination information, weight, volume and dimensions (step **903).**

After scanning of a consignment, the controller may link the consignment identity to a chute identity of a chute on the basis of destination, weight, volume and dimensions (step **904).** When the main conveyor belt is active, a consignment passes a selected chute 7 (step **105)** and the controller activates the ejector associated with the selected chute (step **106).** In response the ejector moves the consignment from the conveyer onto the chute (step **107).** The consignment is subsequently moved from the chute into a transportation means, e.g. a cage or a truck (step **108).**

When a cage or a truck is positioned at the downstream end of a chute, the cage or truck is configured to identify itself (log on) to the controller on the basis of an identifier (e.g. a cage identifier or a truck identifier) (steps **909).** In response the controller may link the cage or truck identity to a chute identity of the chute (step **910).** Subsequently for each consignment that is moved to the chute the controller links the consignment identity to the cage or truck identity (step **911).** This way the controller may determine which individual consignments are within a given cage or truck and to trace which cage or truck contains a given consignment. After a time period, e.g., after filling the cage or the truck, the cage is logged off with the controller and a new cage or truck can identify itself to the controller.

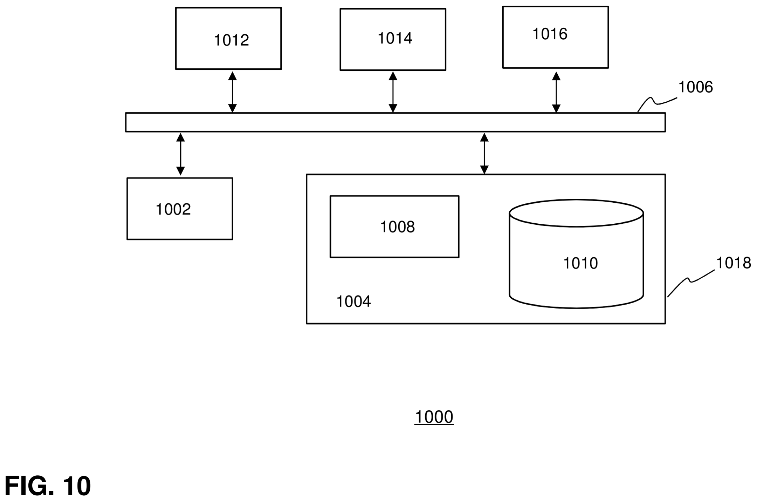

**Fig. 10** provides a schematic illustration of a data processing system **1000** operable to implement one or more aspects of the present invention. As shown, the system **1000** includes a block diagram illustrating an exemplary data processing system that may be used in as described in this disclosure. Data processing system **1000** may include at least one processor **1002** coupled to memory elements **1004** through a system bus **1006.** As such, the data processing system may store program code within memory elements **1004.** Further, processor **1002** may execute the program code accessed from memory elements **1004** via system bus **1006.** In one aspect, data processing system may be implemented as a computer that is suitable for storing and/or executing program code. It should be appreciated, however, that data processing system **1000** may be implemented in the form of any system including a processor and memory that is capable of performing the functions described within this specification.

Memory elements **1004** may include one or more physical memory devices such as, for example, local memory **1008** and one or more bulk storage devices **1010.** Local memory may refer to random access memory or other non-persistent memory device(s) generally used during actual execution of the program code. A bulk storage device may be implemented as a hard drive or other persistent data storage device. The processing system **1000** may also include one or more cache memories (not shown) that provide temporary storage of at least some program code in order to reduce the number of times program code must be retrieved from bulk storage device **1010** during execution.

Input/output (I/O) devices depicted as input device **1012** and output device **1014** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **1016** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system.

As pictured in **FIG. 10****,** memory elements **1004** may store an application **1018.** It should be appreciated that data processing system **1000** may further execute an operating system (not shown) that can facilitate execution of the application. Application, being implemented in the form of executable program code, can be executed by data processing system **1000,** e.g., by processor **1002.** Responsive to executing application, data processing system may be configured to perform one or more operations to be described herein in further detail.

It is to be understood that any feature described in relation to any one embodiment may be used alone, or in combination with other features described, and may also be used in combination with one or more features of any other of the embodiments, or any combination of any other of the embodiments. Moreover, the invention is not limited to the embodiments described above, which may be varied within the scope of the accompanying claims.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

### EMBODIMENTS

Although the present invention is defined in the claims, it should be understood that the present invention can also (alternatively) be defined in accordance with the following embodiments:
1. A system for monitoring the physical structure of consignments transported in a pick-up-and-delivery (PUD) network, the monitoring being based on measured consignment information, such as measured weight and measured volume of a consignment, the system comprising:
   a computer system connected via a first scanning system controller to a first scanning system in a first consignment processing location, e.g. a first depot, of the PUD network; and, connected via a second scanning system controller to a second scanning system in a second consignment processing location, e.g. a second depot, of the PUD network,
   the first and second scanning system comprising one or more scales adapted to measure the weight of a consignment, a volume scanner adapted to measure the volume of the consignment; and, a consignment identification system comprising one or more camera units adapted to capture images of different sides of the consignment and to determine a consignment identifier on the basis of the captured image data; and,
   a database for storing consignment information measured by the first and second scanning system;
   wherein the computer system is adapted to:
      receive first measured consignment information from the first scanning system controller, the first measured consignment information being associated with a consignment identifier; and,
      receive second measured consignment information from the second scanning system controller, the second measured consignment information being associated with a consignment identifier that is identical to the consignment identifier associated with the first measured consignment information;
      compare the first measured consignment information with the second measured consignment information; and,
      if at least part of the first measured consignment information deviates from at least part of the second measured consignment information, setting a warning flag in the database, the warning flag signaling that the physical structure of the consignment identified by the consignment identifier has been changed during transportation from the first consignment processing location to the second consignment processing location.
2. System according to embodiment 1 wherein the computer system is further adapted to:
   compare the first measured consignment information with the second measured consignment information; and,
   if the first measured consignment information does not deviate from the second measured consignment information, setting a confirmation flag in the database, the confirmation flag signaling that the physical structure of the consignment identified by the consignment identifier has not been changed during transportation from the first consignment processing location to the second consignment processing location.
3. System according to embodiments 1 or 2 wherein first and second scanning system comprises a weighting system comprising one or more scales, the one or more scales being integrated in the flour of the consignment processing location such that the surface of the floor matches the top surface of the scales.
4. System according to embodiment 3, wherein first and second scanning system controller are adapted to use the consignment identifier and the measured consignment information for determining a first and second loading locating for the consignment at the premises of the first and second consignment processing location respectively; and, to display routing information for guiding a driver to said determined loading location.
5. System according to embodiments 1 or 2 wherein first and second scanning system comprise one or more conveyor belts, wherein at least one of said one or more conveyor belts comprises a scale for determining the weight of consignments that are transported within the consignment processing location via said one or more conveyor belts.
6. A scanning system for routing consignments in a consignment processing location on the basis of measured consignment information, such as measured weight and measured volume of a consignment, the system comprising:
   a weighting system comprising a plurality of scales, the plurality of scales being integrated in the flour of the consignment processing location such that the surface of the floor matches the top surface of the scales
   a volume scanning system mounted above a plurality of scales, the volume scanning systems comprising one or more lasers for scanning one or more consignments located on the at least part of the polarity of scales;
   a consignment identification system comprising one or more camera units adapted to capture images of different sides of the consignment and to determine a code, such as a consignment identifier, on the consignment on the basis of the captured image data;
   a display unit for displaying information to a driver;
   a programmable control unit connected to said weighting system, volume scanning system, consignment identification system and said display;
   wherein the control unit is programmed to use the consignment identifier and the measured consignment information for determining a loading location for the consignment at the premises of the consignment processing location; and, to display routing information for guiding a driver to said determined loading location.
7. A scanning system for routing consignments in a consignment processing location on the basis of measured consignment information, such as measured weight and measured volume of a consignment, the system comprising:
   one or more conveyer belts;
   at least one scanner adapted to determine the weight and volume of consignments transported by the conveyer and to determine a code on the consignments, the scanner being configured to obtain scan data of each scanned parcel including the weight and volume of the consignment, a consignment identity information and destination information;
   a series of chutes, connecting laterally to one or more conveyer belts;
   ejectors arranged to move passing parcels from the conveyer onto associated chutes;
   a programmable control unit arranged for selective activation of the ejectors responsive to the scan data and storing chute identities and associated destination information for each chute;
   wherein the control unit is programmed to enable a transportation means, e.g. cage or a truck, to be logged on when transportation means is linked to a selected chute and to be logged off when the cage is removed from the chute, wherein logging on includes input of a cage identity and linking the cage identity to a chute identity of the selected chute;
   and wherein the control unit is programmed to keep record of parcel identities of parcels moved to said selected chute in a time period between logging on and logging off of the cage.
8. System according to embodiment 7, wherein the cage or truck is provided with a scan readable code coding a cage or truck identity and wherein logging on the cage or truck involves scanning the code and communicating the cage or truck identity to the programmable control unit and linking the cage or truck identity to a chute identity of the chute to which the cage or truck is linked.
**9.** System according to embodiment 8, wherein the code is a bar code, a QR code or a RFID tag.
10. System according to any preceding embodiment, wherein the number, weight and/or joint volume of all consignments assigned to a given chute during the time that a given cage or truck is logged-on is determined and compared with the number or weight of the collected consignments in the cage or truck after the cage or truck has been logged out or with the maximum total loading volume of the cage or truck to determine the identity of the parcels left on the chute after the cage or truck was logged-off.
11. System according to any preceding embodiment, wherein a marker is used to indicate whether or not a cage or truck is logged-in.

## Claims

1. A system for monitoring the physical structure of consignments transported in a pick-up-and-delivery (PUD) network, the monitoring being based on measured consignment information, such as measured weight and measured volume of a consignment, the system comprising:
a computer system connected via a first scanning system controller to a first scanning system in a first consignment processing location, e.g. a first depot, of the PUD network; and, connected via a second scanning system controller to a second scanning system in a second consignment processing location, e.g. a second depot, of the PUD network,
the first and second scanning system comprising one or more scales adapted to measure the weight of a consignment, a volume scanner adapted to measure the volume of the consignment; and, a consignment identification system comprising one or more camera units adapted to capture images of different sides of the consignment and to determine a consignment identifier on the basis of captured image data; and,
a database for storing consignment information measured by the first and second scanning system;
wherein the computer system is adapted to:
receive first measured consignment information from the first scanning system controller, the first measured consignment information being associated with a consignment identifier; and,
receive second measured consignment information from the second scanning system controller, the second measured consignment information being associated with a consignment identifier that is identical to the consignment identifier associated with the first measured consignment information;
compare the first measured consignment information with the second measured consignment information; and,
if at least part of the first measured consignment information deviates from at least part of the second measured consignment information, setting a warning flag in the database, the warning flag signaling that the physical structure of the consignment identified by the consignment identifier has been changed during transportation from the first consignment processing location to the second consignment processing location and,
trigger an appropriate action.

2. The system according to claim 1, wherein the computer system is further adapted to:
compare the first measured consignment information with the second measured consignment information; and,
if the first measured consignment information does not deviate from the second measured consignment information, setting a confirmation flag in the database, the confirmation flag signaling that the physical structure of the consignment identified by the consignment identifier has not been changed during transportation from the first consignment processing location to the second consignment processing location.

3. The system according to claims 1 or 2, wherein first and second scanning system comprises a weighting system comprising one or more scales, the one or more scales being integrated in a floor of the first and the second consignment processing locations such that a surface of the floor matches top surfaces of the scales.

4. The system according to claims 1 or 2, wherein first and second scanning system comprise one or more conveyor belts, wherein at least one of said one or more conveyor belts comprises a scale for determining the weight of consignments that are transported within the consignment processing location via said one or more conveyor belts.

5. The system according to claims 1 or 2, wherein the first scanning system and the second scanning system measures the weight and the volume of a consignment, identifies the consignment by determining a code representing the consignment identifier.

6. The system according to claim 5, wherein the code is a bar code or a QR code.

7. The system according to claims 1 or 2, wherein the computer system is further adapted to use the consignment identifier to link the first measured consignment information with customer shipment information.

8. The system according to claim 7, wherein if it is determined that the weight of the consignment deviates from weight information in the customer shipment information, the appropriate action comprises correcting billing information.

9. The system according to claims 1 or 2, wherein if the at least part of the first measured consignment information deviates from the at least part of the second measured consignment information, the computer system is further adapted to:
analyse the captured image data of the consignment to localize changes in a shape of the consignment, wherein the changes in the shape of the consignment indicate that the consignment is damaged.

10. The system according to claims 1 or 2, wherein if at least part of the first measured consignment information deviates from at least part of the second measured consignment information outside of a predetermined error range,
setting a warning flag in the database, the warning flag indicating that the physical structure of the consignment identified by the consignment identifier has been changed during transportation from the first consignment processing location to the second consignment processing location.

11. The system according to claims 1 or 2, wherein:
the first measured consignment information represents a physical state of the consignment when it enters the PUD network;
the second measured consignment information represents a physical state of the consignment at an end of a delivery route; and
the computer system is further adapted to:
compare the first measured consignment information with the second measured consignment information, and
if at least part of the first measured consignment information deviates from at least part of the second measured consignment information, determine that no damage occurred during transportation of the consignment.

12. The system according to claims 1 or 2, wherein the computer system is further adapted to:
generate, on the basis of the first measured consignment information or the second measured consignment information, routing information representing a route through the first consignment processing location or the second consignment processing location to a load position of a vehicle that is suitable for transporting the consignment.

13. The system according to claims 1 or 2, wherein the computer system is further adapted to:
generate, on the basis of the first measured consignment information or the second measured consignment information, routing information for controlling routing of the consignment through a plurality of computer-controllable conveyor belts.

14. A computer-implemented method for monitoring the physical structure of consignments transported in a pick-up-and-delivery (PUD) network, the monitoring being based on measured consignment information, such as measured weight and measured volume of a consignment, the method comprising operations according to the system of any of the preceding claims.

15. One or more computer readable media encoded with instructions that, when executed by one or more computers, cause the computer system to perform operations according to any of the preceding claims.
